# EUROPEAN PATENT APPLICATION

(11) **EP 2 562 046 A2**
(43) Date of publication of application: **27.02.2013**
(21) Application number: 12180102.1
(22) Date of filing: 10.08.2012
(51) Int. Cl.: B60Q 1/32, B60Q 1/26

(54) **Assembly and method for automatic puddle light switching**

(30) Priority: 26.08.2011 US 201113219319
(71) Applicant: Honda Motor Co., Ltd., Tokyo 107-8556 (JP)
(72) Inventor: Kracker, Thomas G, Raymond, OH Ohio 43067-9705 (US); Glazier, Joshua T., Raymond, OH Ohio 43067-9705 (US); Dodley, Kyle Q., Raymond, OH Ohio 43067-9705 (US); Murray, Sean A., Raymond, OH Ohio 43067-9705 (US); Binfet, Michael T., Raymond, OH Ohio 43067-9705 (US)
(74) Representative: Beder, Jens

(57) **Abstract**

A vehicle assembly includes an external rearview mirror support arm (12), an external rearview mirror housing (14), a mirror (16), a puddle light (18), a proximity sensor (30), and a switch (36). The external rearview mirror housing (14) pivotally connects with the support arm (12). The mirror (16) mounts to the housing. The puddle light (18) connects with the housing. The proximity sensor (30) includes a first component (32) mounted to the support arm (12) and a second component (34) mounted to the housing (14). The second component (34) rotates with respect to the first component (32) when the housing (14) is pivoted with respect to the support arm (12). The switch (36) electrically connects with the puddle light (18), at least one of the components of the proximity sensor (30) and a power source (38). The switch (36) is closed when the second component (34) is located in a first position with respect to the first component (32). The switch (36) is open when the second component (34) is located in a second position with respect to the first component (32). A method for controlling power to a puddle light (18) is also disclosed.

## Description

### BACKGROUND

Puddle lights mount to an external rearview mirror support arm or an external rearview mirror housing of a vehicle and project light downwardly to illuminate the ground near a front door of the vehicle. Puddle lights provide light on the ground to assist in ingress/egress of the vehicle.

Economic Commission for Europe (ECE) Regulations state that no white light which could give rise to confusion shall be emitted from an exterior courtesy lamp in a rearward direction. More specifically, the aforementioned Regulation requires that there must be no direct visibility of the apparent surface of a white lamp if viewed by an observer moving within a zone in a transverse plane situated 25 meters behind the vehicle. Such exterior courtesy lamps are defined as lamps used to provide supplementary illumination to assist the entry and exit of the vehicle driver and passenger or in loading operations. Puddle lights fit the description of exterior courtesy lamps.

Oftentimes external rearview mirror housings rotate about a substantially vertical axis with respect to the vehicle. The mirror housing rotates between an extended position, which is a position in which the rearview mirror housing is typically found when driving the vehicle, and a retracted position (or garage mode) where a mirror in the mirror housing is generally parallel with a side of the vehicle. If a puddle light, which emits white light, were to be illuminated while the external rearview mirror housing is in the retracted position, the puddle light may not meet the aforementioned ECE Regulation.

### SUMMARY

A vehicle assembly that can overcome at least one of the aforementioned shortcomings includes an external rearview mirror support arm, an external rearview mirror housing, a mirror, a puddle light, a proximity sensor, and a switch. The external rearview mirror housing pivotally connects with the support arm. The mirror mounts to the housing. The puddle light connects with the housing. The proximity sensor includes a first component mounted to the support arm and a second component mounted to the housing. The second component rotates with respect to the first component when the housing is pivoted with respect to the support arm. The switch electrically connects with the puddle light, at least one of the components of the proximity sensor and a power source. The switch is closed when the second component is located in a first position with respect to the first component. The switch is open when the second component is located in a second position with respect to the first component.

A method for controlling power to a puddle light mounted on a vehicle external rearview mirror housing includes mounting a first component of a proximity sensor on a vehicle adjacent the housing; mounting a second component of the proximity sensor on the housing; electrically connecting the puddle light with a power source, the second component of the proximity sensor, and a switch; and controlling a state of the switch based on a position of the second component in relation to the first component of the proximity sensor.

An example of a vehicle rearview mirror assembly that can overcome at least one of the aforementioned shortcomings includes a mirror housing, a mirror, a puddle light, a proximity sensor component, and a switch. The mirror housing is configured to pivot with respect to an associated vehicle between a first position and a second position. The mirror mounts to the housing. The puddle light connects with the housing and is configured to project light downwardly from the housing. The proximity sensor component mounts to the housing. The switch is in electrical communication with the puddle light, the proximity sensor component and an associated power source. The switch is operable in a first operating condition where power is deliverable through the switch for illuminating the puddle light and a second operating condition where power is not deliverable through the switch to the puddle light such that the puddle light does not illuminate. The respective operating condition of the switch is based on a position of the proximity sensor component with respect to a fixed location on the associated vehicle.

### BRIEF DESCRIPTION OF THE DRAWINGS

FIG. 1 is a perspective view of a vehicle assembly including an external rearview mirror support arm and an external rearview mirror housing pivotally connected with the support arm.

FIG. 2 is a side view of a vehicle including the vehicle assembly of FIG. 1 depicting a downwardly projecting light beam pattern from a puddle light of the vehicle assembly.

FIG. 3 is a schematic depiction of the proximity sensor and light source of the puddle light for the vehicle assembly depicted in FIG. 1 with the light source shown as ON.

FIG. 4 is a schematic depiction of a proximity sensor and a light source of the puddle light for the vehicle assembly depicted in FIG. 1 with the light source shown as OFF.

FIG. 5 is a cross-sectional view of the vehicle assembly depicted in FIG. 1 with the mirror housing shown in an extended position.

FIG. 6 is a cross-sectional view of the vehicle assembly depicted in FIG. 1 with the mirror housing shown in a retracted position (garage mode).

### DETAILED DESCRIPTION

The descriptions and drawings herein are merely illustrative and various modifications and changes can be made in the structures disclosed without departing from the scope of the appended claims. Identified components of a vehicle assembly described below are merely terms of art that may vary from one vehicle manufacturer to another and should not be deemed to limit the present disclosure or the appended claims.

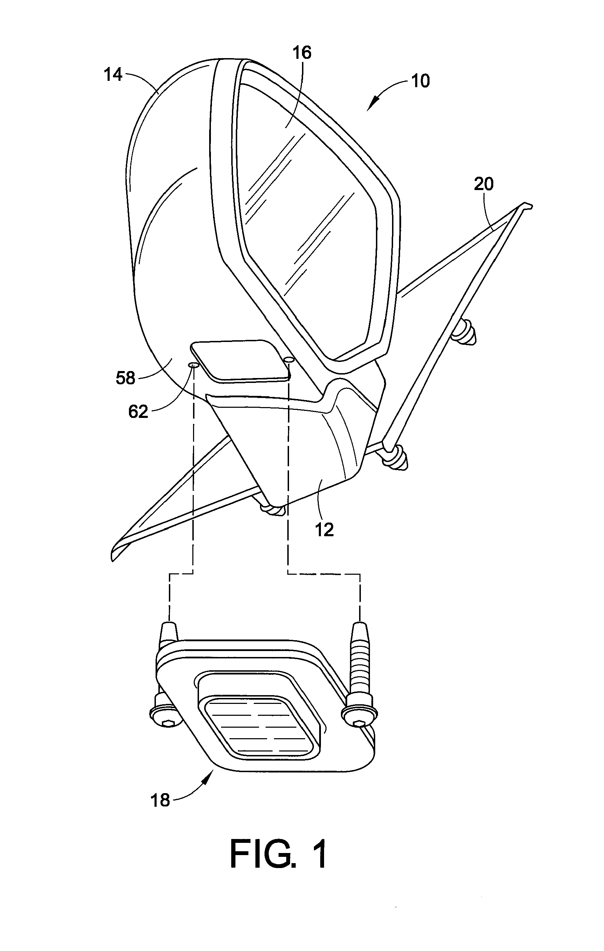

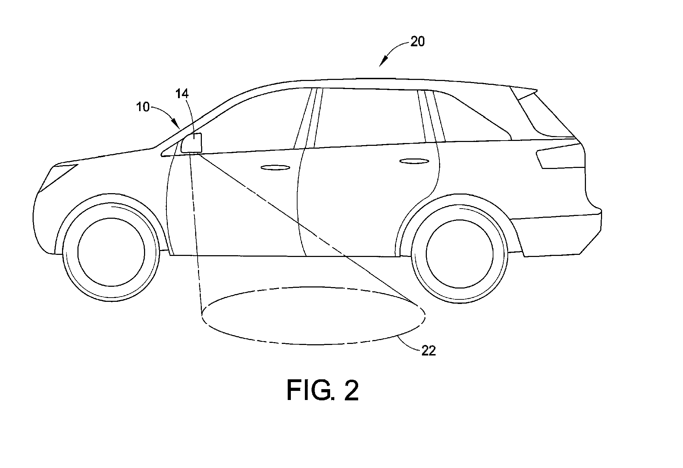

Referring now to the drawings, where like numerals refer to like parts throughout the several views, FIG. 1 illustrates a vehicle assembly 10 including an external rearview mirror support arm 12, an external rearview mirror housing 14, a mirror 16 mounted to the housing and a puddle light 18 connected with the housing. As will be described in further detail below, the mirror housing 14 pivotally connects with the support arm 12. With reference to FIG. 2, the vehicle assembly 10 mounts to a motor vehicle body 20 of a motor vehicle and the puddle light 18 (FIG 1) is configured to project light downwardly from the housing 14 to project a light beam pattern 22 on the ground adjacent the vehicle to assist the entry and exit of the vehicle driver or passenger.

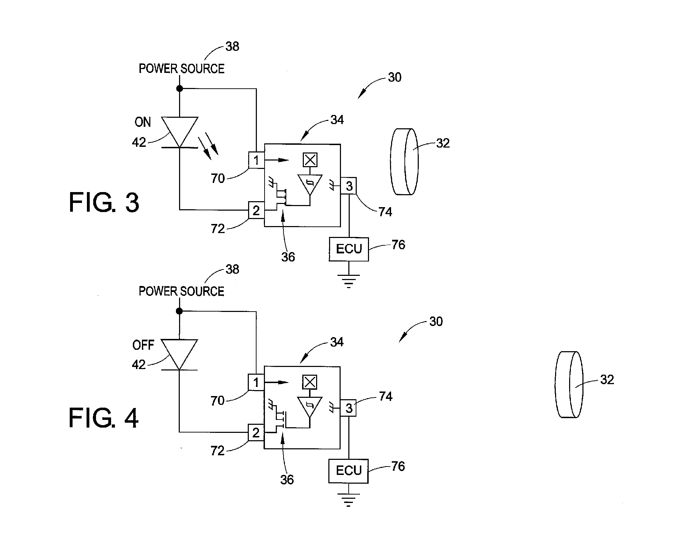

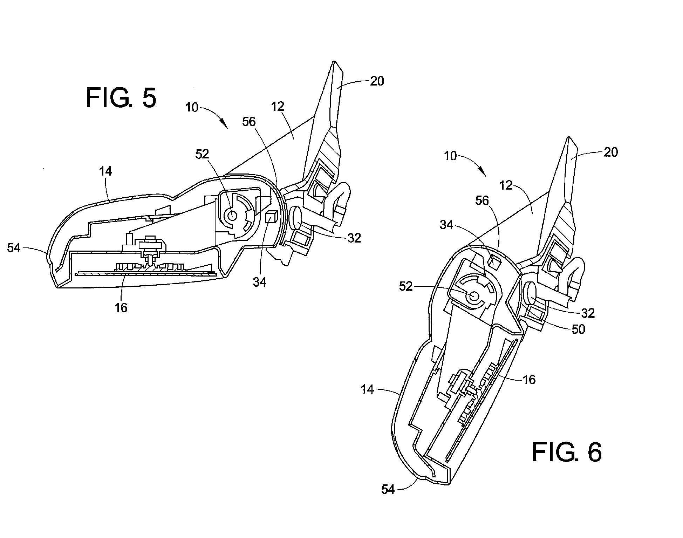

With reference to FIG. 3, the vehicle assembly 10 (FIG. 1) includes a proximity sensor 30 including a first component 32 and a second component 34. As seen in the embodiment depicted in FIGS 5 and 6, the first component 32 of the proximity sensor 30 mounts to the support arm 12 and the second component 34 of the proximity sensor mounts to the mirror housing 14. As seen when comparing FIG. 5 to FIG. 6, for the illustrated embodiment, the first component 32 of the proximity sensor 30 mounts to the support arm 12 and the second component 34 of the proximity sensor 30 mounts to the housing 14 such that the second component 34 rotates with respect to the first component 32 when the housing 14 is pivoted with respect to the support arm 12.

With reference back to FIG. 3, the vehicle assembly 10 also includes a switch 36 electrically connected with the puddle light 18 (FIG. 1), at least one of the components 32, 34 of the proximity sensor 30 and a power source 38. As illustrated in FIGS. 3 and 4, the switch 36 is electrically connected with the second component 34 of the proximity sensor. The switch 36 controls the delivery of power to a light source 42 of the puddle light 18 (FIG. 1). The switch 36 is operable in a first operating condition where power is deliverable through the switch for illuminating the puddle light 18 (FIG. 1) and a second operating condition where power is not deliverable through the switch to the puddle light such that the puddle light can not be illuminated. The respective operating condition of the switch 36 is based on a position of the second proximity sensor component 34 with respect a fixed location on the vehicle body 20 (see FIGS. 4 and 5). In the illustrated embodiment, the switch 36 is closed when the second component 34 of the proximity sensor 30 is located in a first position with respect to the first component 32, which is shown in FIGS. 3 and 5. The switch 36 is open when the second component 34 of the proximity sensor 30 is located in a second position with respect to the first component 32 of the proximity sensor, which is shown in FIG. 4.

With reference to FIGS 5 and 6, the external rearview mirror support arm 12 connects with the vehicle body 20 and extends outwardly therefrom. The external rearview mirror support arm 12 includes an external wall 50, which is curved in the illustrated embodiment. The first component 32 of the proximity sensor 30 is mounted adjacent the external wall 50. In the illustrated embodiment, the first component 32 of the proximity sensor 30 is disposed on an internal side of the external wall 50 within or inside the support arm 12 so as not to be visible by an operator of the vehicle.

As seen in the embodiment illustrated in FIGS. 5 and 6, the external rearview mirror housing 14 is pivotally connected with the support arm 12 to pivot about an axis 52, which can be generally vertically oriented. The mirror housing 14 can also rotate upwards and downwards with respect to the vehicle body. The mirror housing 14 can have a conventional shape and include a distal end 54 and a proximal end 56, which is nearer the support arm 12 (and the vehicle body 20) as compared to the distal end. With reference back to FIG. 1, the mirror housing 14 also includes a lower surface 58, which is generally planar in the illustrated embodiment. Fastener openings 62 are provided in the lower surface 58 for attaching the puddle light 18 to the mirror housing 14 at the lower surface 58.

With reference back to FIGS. 5 and 6, the second component 34 of proximity sensor 30 (FIGS. 3 and 4) is mounted within the housing 14 adjacent the proximal end 56. The second component 34 of the proximity sensor 30 is fixed to the mirror housing 14 such that the second component of the proximity sensor rotates about the axis 52 and moves with the mirror housing 14 when the mirror housing is rotated about the axis 52. The mirror housing 14 pivots between an extended position (shown in FIG. 5) and a retracted position (shown in FIG. 6). The first component 32 of the proximity sensor 30 is nearer the second component 34 of the proximity sensor 30 when the housing 14 is in the extended position (shown in FIG. 5) as compared to the retracted position (shown in FIG. 6). As mentioned above, the support arm 12 includes the external wall 50. The external wall 50 of the support arm 12 is adjacent the proximal end 56 of the mirror housing 14 when the mirror housing is in the extended position, which is shown in FIG. 5. In the illustrated embodiment, the second component 34 of the proximity sensor 30 is disposed internally within the mirror housing 14 so as not to be visible by an operator of the vehicle and the proximal end 56 of the mirror housing can have a complementary shape to the external wall 50 of the support arm 12.

With reference back to FIG. 1, the puddle light 18 connects with the mirror housing 14. As illustrated, the puddle light 18 mounts to the lower surface 58 of the mirror housing 14. The puddle light 18 is configured to project light downwardly from the housing 14, which is shown in FIG. 2. With reference to FIGS. 3 and 4, the puddle light 18 includes the light source 42 to generate the light beam pattern 22 shown in FIG. 2. The light source 42 depicted in FIGS. 3 and 4 is a light emitting diode (LED). In alternative embodiments, the light source can include an incandescent bulb or similar electrical light source. The light source 42 can mount to a circuit board (not shown) upon which the second component 34 of the proximity sensor, which can include the switch 36, is also mounted. The light source 42 is electrically connected to the power source 38 and the second component 34 of the proximity sensor 30 in the illustrated embodiment. The puddle light 18 is configured to generate white light to illuminate the ground adjacent the vehicle body 20 for ingress/egress of the vehicle. Since the puddle light 18 mounts to the mirror housing 14 for rotation therewith, the puddle light also rotates about the axis 52 (FIGS. 5 and 6) when the mirror housing is rotated with respect to the support arm 12 and/or the vehicle body 20.

With reference to FIGS. 3 and 4, the proximity sensor 30 includes the first component 32, which can be a magnet, and the second component 34, which can be a Hall effect sensor. FIGS. 5 and 6 schematically depict the second component 34 of the proximity sensor 30. In the embodiment illustrated in FIGS. 5 and 6, the second component 34 of the proximity sensor 30 is mounted internally in the housing 14 and moves with respect to the first component 32 when the housing 14 rotates about the axis 52. When the mirror housing 14 is in the extended position, which is shown in FIG. 5, the second component 34, which can be a Hall effect sensor, is in a first position with respect to the magnet (first component 32). When in the first position, the Hall effect sensor detects the magnetic field of the magnet, which is the first component 32 of the proximity sensor 30. With reference back to FIG. 3, when the first component 34 (Hall effect sensor is shown in FIG. 3) of the proximity sensor 30 detects the magnetic field of the magnet (second component 32 of the proximity sensor 30) the switch 36 (which can be a component of the Hall effect sensor) closes such that power from the power source 38 can be delivered through the switch 36 to the light source 42 of the puddle light 18 to illuminate the light source (turn the light source ON). When the mirror housing 14 is rotated into the retracted position (or rotated away from the extended position), the second component 34 (Hall effect sensor) of the proximity sensor 30 moves to a second position with respect to the first component 32 (magnet), which is shown in FIG. 6. With reference to FIG. 4, when the second component 34 of the proximity sensor 30 is moved into the second position (or rotated away from the extended position), the second component 34 (Hall effect sensor shown in FIG. 4) of the proximity sensor 30 is located far enough from the first component 32 (magnet) such that the magnetic field is no longer detected and the switch 36 is now open. With the switch 36 open, power from the power source 38 is not deliverable to the light source 42 of the puddle light 18 (FIG. 1) so that the light source 42 is OFF.

In the embodiment depicted in FIGS. 5 and 6, the first component 32 of the proximity sensor 30 is depicted as a magnet mounted to the support arm 12 and the second component 34, which is depicted as a Hall effect sensor in FIGS. 3 and 4, is mounted to the mirror housing 14. In an alternative arrangement, the Hall effect sensor could mount to the support arm 12 and the magnet 32 could mount to the mirror housing 14. In this alternative arrangement, the circuitry depicted in FIGS. 3 and 4 could remain the same. FIGS. 3 and 4 depict the second component 34 of the proximity sensor 30 to be a Hall effect sensor. In an alternative embodiment, the second component 34 of the proximity sensor 30 could be a Reed switch. Moreover, other proximity sensor arrangements could be used, such as a light sensor arrangement. In such an arrangement, one of the first component 32 and the second component 34 of the proximity sensor 30 would be a light source, and the other would be a sensor for detecting light. Upon detecting a light beam from the light source (e.g., when the housing 14 is in the extended position), the light sensor could operate to close a switch, similar to the switch 36, so that power is provided from the power source 38 to the light source 42 of the puddle light 18. When the light beam is not detected by the light sensor, for example when the housing 14 is in the retracted position, the light sensor could operate to open the switch.

With reference back to FIGS. 3 and 4, the switch 36 electrically connects with the puddle light 18 (and more particularly the light source 42 of the puddle light 18), at least one of the components 32, 34 of the proximity sensor 30 and the power source 38. The switch 36 is closed when the second component 34 of the proximity sensor 30 is located in a first position with respect to the first component 32, which is shown in FIGS. 3 and 5. The switch 36 is open when the second component 34 of the proximity sensor 30 is located in the second position with respect to the first component 32, which is shown in FIGS. 4 and 6. The switch 36 could be a component of the second component 34 of the proximity sensor 30 or be a separate component. In the embodiment illustrated in FIGS. 5 and 6, the switch 36 is mounted to the mirror housing 14.

A vehicle rearview mirror assembly 10 has been described above. The rearview mirror assembly 10 includes the mirror housing 14, which is configured to pivot with respect to the vehicle body 20 between a first position, which is shown in FIG. 5, and a second position, which is shown in FIG. 6. The mirror 16 mounts to the mirror housing 14. The puddle light 18 connects with the mirror housing 14 and is configured to project light downwardly from the housing. A proximity sensor component, such as the second component 34 of the proximity sensor 30, mounts to the housing 14. The switch 36 is in electrical communication with the puddle light 18 (and more particularly the light source 42 of the puddle light), the proximity sensor component mounted in the housing (which in the depicted embodiment is the second component 34) and the power source 38. The switch 36 is operable in a first operating condition where power is deliverable through the switch 36 to illuminate the puddle light 18. The switch is operable in a second operating condition where power is not delivered through the switch 36 to the puddle light 18 such that the puddle light is not illuminated. The respective operating condition of the switch 36 is based on a position of the proximity sensor component in the mirror housing 14 (the second component 34 in the depicted embodiment) with respect to a fixed location on the vehicle body 20. As can be seen when comparing FIG. 5 to FIG. 6, the second component 34 of the proximity sensor 30 moves away from the fixed location, which is the location where the first component 32 is mounted to the vehicle body 20, and thus, the operating condition of the switch 36 can be based on the position of the second component 34 with respect to the fixed location on the vehicle body 20.

A method for controlling power to the puddle light 18 mounted on the vehicle external rearview mirror housing includes mounting the first component 32 of the proximity sensor 30 on the vehicle 20 adjacent the housing 14. Mounting the first component 32 of the proximity sensor 30 can further include mounting the first component 32 adjacent a wall, such as the external wall 50 of the external rearview mirror support arm 12 nearest the mirror housing 14.

The method for controlling power to the puddle light 18 can further include mounting the second component 34 of the proximity sensor 30 on the housing 14. Mounting the second component 34 of the proximity sensor 30 can further include mounting the second component 34 adjacent an end (proximal end 56) of the housing 14 nearest the vehicle body 20 when the housing 14 is in the extended position, such as that shown in FIG. 5.

The method for controlling power to the puddle light 18 can further include electrically connecting the puddle light 18 (more particularly the light source 42 of the puddle light) with the power source 38, the second component 34 of the proximity sensor 30 and the switch 36. The puddle light 18, the second component 34 of the proximity sensor 30 and the switch 36 are all disposed within the housing 14 in the illustrated embodiment. In other embodiments, the switch 36 may be mounted to the support arm 12 or in the vehicle body 20. Additionally, the power source 38 can be the vehicle battery (not shown), and thus not be mounted in the mirror housing 14. In an alternative embodiment, the power source can be located within the mirror housing 14.

The method for controlling power to the puddle light 18 can also include controlling a state of the switch 36 based on a position of the second component 34 in relation to the first component 32 of the proximity sensor 30. For example, when the mirror housing 14 is in the extended position, which is shown in FIG. 5, power can be delivered from the power source 38 to illuminate the light source 42 of the puddle light 18. When the mirror housing 14 is in the retracted position, which is shown in FIG. 6, power from the power source 38 is not delivered through the switch 36 such that the light source 42 of the puddle light is not illuminated. In the embodiment illustrated in FIGS. 3 and 4, the second component 34 of the proximity sensor 30 includes three connection terminals. A first terminal 70 and a second terminal 72 are connected to opposite sides of the light source 42 of the puddle light 18. A third terminal 74 can connect to a control unit 76, which is connected to ground. The power and ground connections can also be controlled by the control unit 76. The control unit 76 can further control power delivery (the control unit signal can be ON/OFF or pulse width modulation) from the power source 38 to the light source 42 of the puddle light 18. For example, when the ignition of the vehicle 20 is OFF, power may not be delivered to the light source 42 of the puddle light. The control unit 76 can send signals to the second component 34 of the proximity sensor 30 to further control whether power from the power source 38 is to be delivered to the light source 42 of the puddle light.

The method for controlling power to the puddle light 18 can further include mounting the housing 14 to the vehicle body 20 such that the housing rotates about the axis 52 with respect to the vehicle body between the retracted position, which is shown in FIGS. 6, and the extended position, which is shown in FIG. 5. When the mirror housing 14 is in the retracted position, which is shown in FIG. 6, power from the power source 38 is not delivered to the light source 42 of the puddle light and the light source is OFF, which is shown in FIG. 4. This inhibits white light from the puddle light 18 from being viewed by an observer behind the vehicle 20 when the mirror housing 14 is in the retracted position. Accordingly, a vehicle rear view mirror assembly 10 that includes the puddle light 18 can be provided that complies with the aforementioned regulation.

A vehicle assembly, a method for controlling power to a puddle light mounted on a vehicle external rearview mirror housing, and a vehicle rearview mirror assembly have been described above with particularity. Modifications and alterations will occur to those upon reading and understanding the preceding detailed description. The invention, however, is not limited to only the embodiments described above. Instead, the invention is broadly defined by the appended claims and the equivalents thereof.

It will be appreciated that various of the above-disclosed and other features and functions, or alternatives or varieties thereof, may be desirably combined into many other different systems or applications. Also that various presently unforeseen or unanticipated alternatives, modifications, variations or improvements therein may be subsequently made by those skilled in the art which are also intended to be encompassed by the following claims.

The invention also covers the following aspects: A vehicle rear view mirror assembly comprising: a mirror housing configured to pivot with respect to an associated vehicle body between a first position and a second position; a mirror mounted to the housing; a puddle light connected with the housing and configured to project light downwardly from the housing; a proximity sensor component mounted to the housing; and a switch in electrical communication with the puddle light, the proximity sensor component and an associated power source, wherein the switch is operable in a first operating condition where power is deliverable through the switch for illuminating the puddle light and a second operating condition where power is not deliverable through the switch to the puddle light such that the puddle light is not illuminated, wherein a respective operating condition of the switch is based on a position of the proximity sensor component with respect a fixed location on the associated vehicle body. The vehicle rear view mirror assembly as mentioned above, wherein the proximity sensor component includes a Hall effect sensor. The vehicle rear view mirror assembly as mentioned above, wherein the proximity sensor component includes a light sensor. The vehicle rear view mirror assembly as mentioned above, wherein the proximity sensor component includes a Reed switch. The vehicle rear view mirror assembly as mentioned above, wherein the switch is mounted in the mirror housing. The vehicle rear view mirror assembly as mentioned above, wherein the housing includes a distal end and a proximal end, which is nearer the associated vehicle body as compared to the distal end, wherein the proximity sensor component is mounted in the housing adjacent the proximal end.

## Claims

1. A vehicle assembly comprising:
an external rear view mirror support arm (12);
an external rear view mirror housing (14) pivotally connected with the support arm (12);
a mirror (16) mounted to the housing;
a puddle light (18) connected with the housing (14);
a proximity sensor (30) including a first component (32) mounted to the support arm (12) and a second component (34) mounted to the housing (14) such that the second component (34) rotates with respect to the first component (32) when the housing (14) is pivoted with respect to the support arm (12); and
a switch (36) electrically connected with the puddle light (18), at least one of the components of the proximity sensor (30) and a power source (38), wherein the switch (36) is closed when the second component (34) is located in a first position with respect to the first component (32) and the switch (36) is open when the second component (34) is located in a second position with respect to the first component (32).

2. The vehicle assembly of claim 1, wherein the housing (14) includes a distal end (54) and a proximal end (56), which is nearer the support arm (12) as compared to the distal end (54), wherein the second component (34) of the proximity sensor (30) component is mounted in the housing (14) adjacent the proximal end (56).

3. The vehicle assembly of claim 2, wherein the housing (14) pivots between an extended position and a retracted position, wherein the first component (32) is nearer the second component (34) when the housing (14) is in the extended position as compared to the retracted position.

4. The vehicle assembly of claim 3, wherein the support arm (12) includes an external wall (50) adjacent the housing (14) when the housing (14) is in the extended position, wherein the first component of the proximity sensor (32) is mounted in the support arm (12) adjacent the external wall (50).

5. The vehicle assembly of claim 4, wherein the second component (34) is in the first position when the housing (14) is in the extended position.

6. The vehicle assembly of claim 1, wherein the second component (34) includes a Hall effect sensor or a Reed switch.

7. The vehicle assembly of claim 6, wherein the first component (32) is a magnet.

8. The vehicle assembly of claim 1, wherein the switch (36) is mounted in the housing (14).

9. A method for controlling power to a puddle light mounted on a vehicle external rear view mirror housing comprising:
mounting a first component (32) of a proximity sensor (30) on a vehicle body adjacent the housing (14);
mounting a second component (34) of the proximity sensor (30) on the housing (14);
electrically connecting the puddle light (18) with a power source (38), the second component (34) of the proximity sensor (30), and a switch (38); and
controlling a state of the switch (36) based on a position of the second component (34) in relation to the first component (32).

10. The method of claim 9, wherein mounting the first component further includes mounting the first component (32) adjacent a wall of an external rear view mirror support arm (12) nearest the housing (14).

11. The method of claim 9, further comprising mounting the housing (14) to the vehicle body such that the housing (14) rotates about an axis (52) with respect to the vehicle body between a retracted position and an extended position.

12. The method of claim 11, wherein mounting the second component (34) further includes mounting the second component (34) adjacent an end of the housing (14) nearest the vehicle body when the housing (14) is in an extended position.

13. The method of claim 12, wherein controlling a state of the switch further includes opening the switch (36) when the housing (14) is in the retracted position and closing the switch (36) when the housing (14) is in the extended position.
